# EUROPEAN PATENT SPECIFICATION

(11) **EP 2 269 711 B1**
(45) Date of publication and mention of the grant of the patent: **20.06.2012**
(21) Application number: 09178598.0
(22) Date of filing: 10.12.2009
(51) Int. Cl.: B01D 53/14

(54) **CO2 recovery apparatus and method**
CO2-Rückgewinnungsvorrichtung und Verfahren
Appareil et procédé de récupération de CO2

(30) Priority: 17.06.2009 JP 2009144586
(43) Date of publication of application: 05.01.2011
(73) Proprietor: Mitsubishi Heavy Industries, Tokyo 108-8215 (JP); The Kansai Electric Power Co., Inc., Osaka-shi, Osaka 530-8270 (JP)
(72) Inventor: Iijima, Masaki, MIHARA, HIROSHIMA-KEN 729-0393 (JP); Tanaka, Hiroshi, MIHARA, HIROSHIMA-KEN 729-0393 (JP); Sorimachi, Yoshiki, MIHARA, HIROSHIMA-KEN 729-0393 (JP); Ogura, Kouki, AMAGASAKI, HYOGO 661-0974 (JP); Tatsumi, Masahiko, AMAGASAKI, HYOGO 661-0974 (JP); Yagi, Yasuyuki, AMAGASAKI, HYOGO 661-0974 (JP)
(74) Representative: Intès, Didier Gérard André

(56) References cited:
- EP-A1- 1 132 125
- WO-A1-03/028854
- US-A1- 2003 045 756
- HETLAND J ET AL: "Integrating a full carbon capture scheme onto a 450MWe NGCC electric power generation hub for offshore operations: Presenting the Sevan GTW concept" APPLIED ENERGY, ELSEVIER SCIENCE PUBLISHERS, GB LNKD- DOI:10.1016/J.APENERGY.2009.03.019, vol. 86, no. 11, 1 November 2009 (2009-11-01), pages 2298-2307, XP026122529 ISSN: 0306-2619 [retrieved on 2009-04-14]

## Description

### Technical Field

The present invention relates to a CO₂ recovering apparatus and a CO₂ recovering method that enable a CO₂ absorbent concentration to be kept constant to maintain absorbing performance thereof.

### Background Art

It has come to be pointed out that one of the causes of the global warming is a greenhouse effect of CO₂, and it has become an urgent task, also internationally, to provide a countermeasure for CO₂ to protect the global environment against the warming. CO₂ is generated by any human activities combusting fossil fuels, and there are increasing demands for suppressing CO₂ emissions. Along with such an increasing demand, researchers are energetically investigating a method for reducing and recovering CO₂ included in flue gas, to apply in a power plant that consumes a large amount of fossil fuels, such as a thermal plant. In such a method, flue gas emitted from a steam generator is brought into contact with an amine-based CO₂ absorbent to allow such absorbent to absorb the CO₂, and the recovered CO₂ is stored therein without being released into the air. As processes for reducing and recovering CO₂ from the flue gas using the CO₂ absorbent, Japanese Patent Application Laid-open No. H3-193116, for example, brings flue gas into contact with the CO₂ absorbent in an absorber, heats an absorbent that has absorbed CO₂ in a regenerator, isolates CO₂ as well as regenerates the absorbent, and circulates the absorbent back to the absorber and reuses the absorbent therein.

### Background Art

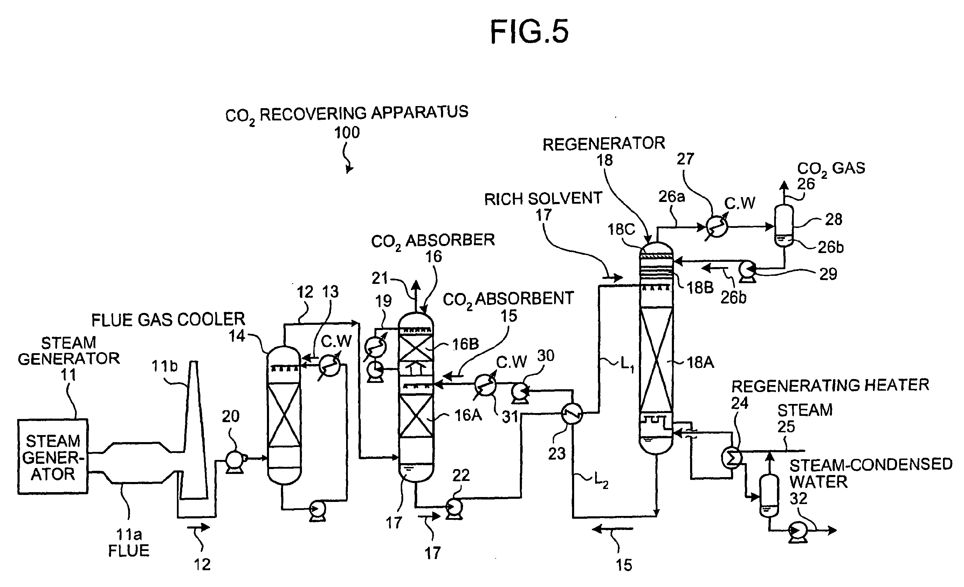

Fig. 5 is a schematic of an example of a conventional CO₂ recovering apparatus. As shown in Fig. 5, a conventional CO₂ recovering apparatus 100 as mentioned above includes a flue gas cooler 14, a CO₂ absorber 16, and a regenerator 18. The flue gas cooler 14 cools flue gas 12 containing CO₂ and O₂ emitted from an industrial combustion facility 11, such as a steam generator or a gas turbine, with cooling water 13. The CO₂ absorber 16 further includes a CO₂ recovering unit 16A. The CO₂ recovering unit 16A brings the flue gas 12, containing the cooled CO₂, into contact with CO₂ absorbent (hereinafter, also referred to as "absorbent") 15 that absorbs CO₂, to reduce CO₂ in the flue gas 12. The regenerator 18 causes CO₂ absorbent (hereinafter, also referred to as "rich solvent") 17 that has absorbed CO₂ to release CO₂ to regenerate the CO₂ absorbent.
In the CO₂ recovering apparatus 100, the regenerated CO₂ absorbent (hereinafter, also referred to as "lean solvent") 15 having CO₂ reduced in the regenerator 18 is reused in the CO₂ absorber 16 as the CO₂ absorbent.

By a CO₂ recovering method using the CO₂ recovering apparatus 100, a flue gas booster fan 20 raises the pressure of the flue gas 12 emitted from an industrial combustion facility such as a steam generator or a gas turbine and containing CO₂. The flue gas 12 is then sent into the flue gas cooler 14, cooled by way of the cooling water 13, and then sent into the CO₂ absorber 16.

The CO₂ absorber 16 then brings the flue gas 12 in a counter-current contact with the CO₂ absorbent 15 that is based on amine-based solvent, allowing the CO₂ absorbent 15 to absorb the CO₂ contained in the flue gas 12 by way of chemical reaction.
A washing unit 16B, included in the CO₂ absorber 16, brings the flue gas having CO₂ reduced in the CO₂ recovering unit 16A into a gas-liquid contact with circulating condensate water 19. The condensate water 19 contains the CO₂ absorbent, and is supplied via a nozzle included in a washing unit 16B. In this manner, the CO₂ absorbent 15 that has accompanied the flue gas having CO₂ reduced is recovered. Flue gas 12 having CO₂ reduced is released out of the system.
A rich solvent pump 22 increases the pressure of the rich solvent that is the CO₂ absorbent 17 that has absorbed CO₂. Then, a rich/lean solvent heat exchanger 23 heats the rich solvent by way of the CO₂ absorbent 15 that is lean solvent regenerated by the regenerator 18, and supplied into the regenerator 18.

The rich solvent discharged into the regenerator 18 through the top thereof causes an endothermic reaction, thus releasing a majority of CO₂. The CO₂ absorbent that has released some or a majority of CO₂ in the regenerator 18 is called semi-lean solvent. By the time the semi-lean solvent reaches the bottom of the regenerator 18, almost all of the CO₂ is removed, turning the semi-lean solvent into the absorbent 15. A regenerating heater 24 then heats the lean solvent by way of steam 25, supplying steam inside the regenerator 18.
CO₂ gas 26 is guided out from the top of the regenerator 18, together with the steam that has been released from the rich solvent and semi-lean solvent in the regenerator 18. A condenser 27 then condenses steam contained in the CO₂ gas 26, and a separation drum 28 separates water from the CO₂ gas 26. The CO₂ gas 26 is then released out of the system, and recovered separately. The recovered CO₂ gas 26 is injected into an oilfield using enhanced oil recovery (EOR) method, or stored in an aquifer as a countermeasure for global warming.
The water separated in the separation drum 28 is pumped up to the top of the regenerator 18 by way of a condensed-water circulating pump 29. The rich/lean solvent heat exchanger 23 cools the regenerated CO₂ absorbent (lean solvent) 15 by way of the rich solvent 17. A lean solvent pump 30 then increases the pressure of the lean solvent 15. After being cooled down by a lean solvent cooler 31, the lean solvent 15 is supplied into the CO₂ absorber 16.

In Fig. 5, the reference numeral 11a denotes to a flue for the flue gas 12; the reference numeral 11b denotes to a stack; and the reference numeral 32 denotes to steam-condensed water. The CO₂ recovering apparatus may be either added to an existing flue gas source to recover CO₂, or installed with a flue gas source that is to be newly installed. A door that can be opened and closed is attached on the stack 11b The door is closed while the CO₂ recovering apparatus is operating, and opened while the flue gas source is operating but the CO₂ recovering apparatus is not operating.

If the CO₂ recovering apparatus is kept running, recovering CO₂ and consuming the CO₂ absorbent, the concentration of the absorbent drops. Because the concentration reduction is by approximately 10 percent in a relative ratio with respect to a set value, according to a conventional technology, high concentration absorbent is added as appropriate.

Furthermore, as disclosed in Japanese Patent Application Laid-open No. 2001-252524, or in European Patent Application No. 1132125, conventionally, a tower bottom liquid level controller is provided in the CO₂ absorber 16 to keep the absorbent concentration constant, and to control a circulating water return temperature in the washing unit 16B to adjust an amine concentration of the absorbent.

### Citation List

### Patent Literature

PATENT LITERATURE 1 Japanese Patent Application Laid-open No. H3-193116
PATENT LITERATURE 2 Japanese Patent Application Laid-open No. 2001-252524

### Summary of Invention

### Technical Problem

According to the suggestion disclosed in the Japanese Patent Application Laid-open No. 2001-252524, the absorbent concentration can be kept constant if the adjustment spans for a short term (e.g., a few days); however, if the operation is kept running for a long time (e.g., one to four weeks or longer), the absorbent concentration gradually drops and is attenuated. In such a situation, high concentration absorbent needs to be added to keep the concentration to a predetermined level.

The present invention is made in consideration of the above, and an object of the present invention is to provide a CO₂ recovering apparatus and a CO₂ recovering method that can keep CO₂ absorbent concentration constant over a long time.

### Solution to Problem

According to an aspect of the present invention, a CO₂ recovering apparatus including a CO₂ absorber that brings flue gas containing CO₂ into contact with a CO₂ absorbent to reduce the CO₂ contained in the flue gas, and a regenerator that reduces CO₂ contained in rich solvent absorbing CO₂ in the CO₂ absorber to regenerate the rich solvent, so that lean solvent that is the CO₂ absorbent having the CO₂ reduced in the regenerator is reused in the CO₂ absorber, includes a controller that detects a difference between a temperature of gas entering the CO₂ absorber and that of gas exiting the CO₂ absorber, and an absorbent concentration of the CO₂ absorbent, and controls the absorbent concentration of the CO₂ absorbent within a set range by adjusting an amount of water contained in the gas depending on the difference between the temperature of the gas entering the CO₂ absorber and that of the gas exiting the CO₂ absorber to.

Advantageously, the CO₂ recovering apparatus further includes a CO₂ absorbent level meter disposed in a bottom liquid depository of the CO₂ absorber. A CO₂ absorbent of a set concentration is supplied when a liquid level drops.

Advantageously, in the CO₂ recovering apparatus, the temperature of the gas entering the CO₂ absorber and that of the gas exiting the absorber, and the absorbent concentration and the liquid level of the CO₂ absorbent are detected, and the liquid level is lowered incrementally, and the CO₂ absorbent of the set concentration is supplied into a system when the liquid level reaches a lowest set level, while keeping the temperature of the gas exiting the CO₂ absorber within a predetermined range.

According to another aspect of the present invention, a CO₂ recovering method using a CO₂ absorber that brings flue gas containing CO₂ into contact with a CO₂ absorbent to reduce the CO₂ contained in the flue gas, and a regenerator that reduces CO₂ contained in rich solvent absorbing CO₂ in the CO₂ absorber to regenerate the rich solvent, so that lean solvent that is the CO₂ absorbent having the CO₂ reduced in the regenerator is reused in the CO₂ absorber, includes detecting a difference between a temperature of gas entering the CO₂ absorber and that of gas exiting the CO₂ absorber, and an absorbent concentration of the CO₂ absorbent, and controlling the absorbent concentration of the CO₂ absorbent within a set range by adjusting an amount of water contained in the gas depending on the difference between the temperature of the gas entering the CO₂ absorber and that of the gas exiting the CO₂ absorber.

### Advantageous Effects of Invention

According to one aspect of the present invention, even if the operation is continued for a long time, the absorbent concentration can be kept constant to maintain the absorbing performance thereof.

Furthermore, because the level meter is provided in the liquid depository of the CO₂ absorber, the liquid level can also be kept constant.

### Brief Description of Drawings

Fig. 1 Fig. 1 is a schematic of a CO₂ recovering apparatus according to a first embodiment of the present invention.
Fig. 2 Fig. 2 is a schematic of a relationship between an operation time of the CO₂ recovering apparatus according to the first embodiment and a ratio of a set concentration of the absorbent.
Fig. 3 Fig. 3 is a schematic of a relationship between an operation time of a conventional CO₂ recovering apparatus and a ratio of the set concentration of the absorbent.
Fig. 4 Fig. 4 is a schematic of a CO₂ recovering apparatus according to a second embodiment of the present invention.
Fig. 5 Fig. 5 is a schematic of an example of the conventional CO₂ recovering apparatus.

### Description of Embodiments

Embodiments of the CO₂ recovering apparatus according to the present invention will now be explained in detail with reference to the drawings. The embodiments herein are not intended to limit the scope of the present invention in any way.

### Example 1

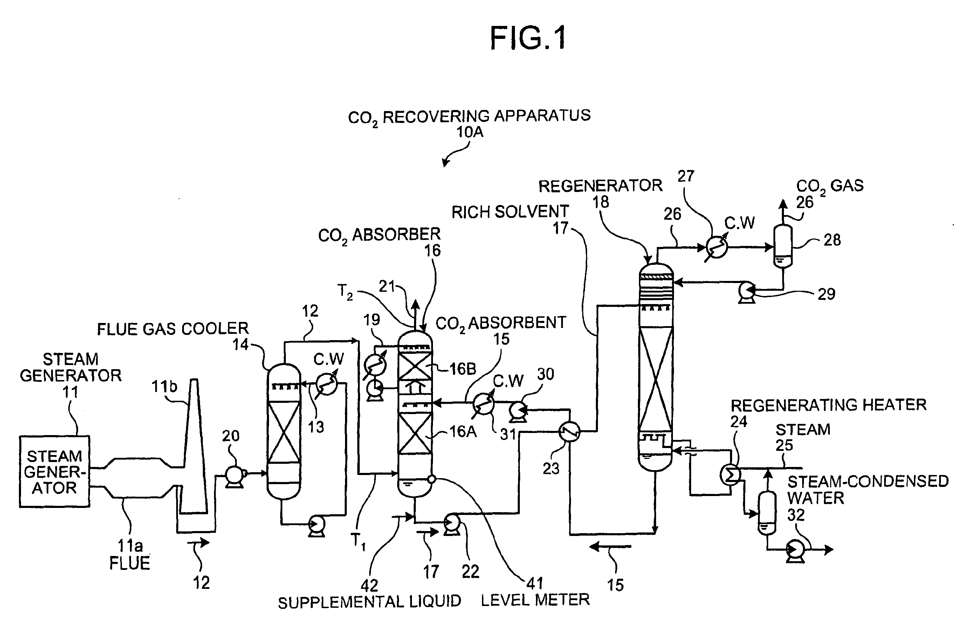

A first embodiment of the CO₂ recovering apparatus according to the present invention will be explained with reference to Fig. 1.
Fig. 1 is a schematic of a structure of the CO₂ recovering apparatus according to the first embodiment. In Fig. 1, the same structures as those included in the CO₂ recovering apparatus shown in Fig. 5 are given the same references signs, and the redundant explanations thereof are omitted herein.
As shown in Fig. 1, a CO₂ recovering apparatus 10A according to the first embodiment includes the CO₂ absorber 16 that brings the flue gas 12 containing CO₂ into contact with the CO₂ absorbent 15 to reduce the CO₂ contained in the flue gas 12; the regenerator 18 that reduces CO₂ contained in the rich solvent 17 that has absorbed CO₂ in the CO₂ absorber 16 to regenerate the rich solvent 17, so that the lean solvent that is the CO₂ absorbent 15 having CO₂ reduced in the regenerator 18 is reused in the CO₂ absorber 16; and a controller that detects a gas temperature difference between a temperature (T₁ (e.g., approximately 40 Celsius degrees)) of the flue gas 12 that is guided into an entrance of the CO₂ absorber 16 at such an entrance and a temperature (T₂ (e.g., 40 approximately Celsius degrees)) of the exiting gas 21 in the CO₂ absorber 16, and an absorbent concentration (X (Vol%)) of the CO₂ absorbent 15, and controls to adjust an amount of water depending on the gas temperature difference between the entering gas and the exiting gas 21 in the CO₂ absorber 16 to keep the absorbent concentration of the CO₂ absorbent 15 within a set range (e.g., X₀±10% in a relative ratio).
The entering gas temperature of the flue gas 12 (T₁ (approximately 40 Celsius degrees)) and the temperature of the exiting gas 21 (T₂ (approximately 40 Celsius degrees)) are measured by thermometers not shown, and communicated to a controlling apparatus not shown as well.
The gas temperature of the entering flue gas 12 (T₁ (approximately 40 Celsius degrees or so)) is measured to confirm that flue gas is guided into the CO₂ absorber 16 properly under an initial condition.

According to the first embodiment, to control to keep the absorbent concentration of the CO₂ absorbent 15 within a set range (for example, X±10% in a relative ratio), the exiting gas temperature (T₂) is increased when the amount of water needs to be reduced.
In this manner, the concentration of the CO₂ absorbent can be kept constant, and the CO₂ absorbing performance thereof can be maintained.

To detect the absorbent concentration (X (Vol%)) of the CO₂ absorbent 15, the CO₂ absorbent 15 is sampled and analyzed. An initial concentration is herein denoted as X₀; the first measurement is denoted as X₁; and the second measurement is denoted as X₂. The analysis may be performed either manually or automatically.

A specific example of an operation of the CO₂ recovering apparatus will now be explained.
(1) The temperature of the flue gas 12 guided into the entrance of the CO₂ absorber 16 and that of the exiting gas 21 in the CO₂ absorber 16 are measured.
   The CO₂ absorbent 15 is sampled, and the first measurement is conducted. The result of the first measurement is herein denoted as the concentration X₁.
(2) Based on the concentration X₁ that is the measurement result, if the concentration X₁ is within the set range (e.g., X±1%), the controlling apparatus not shown controls to maintain the operation as it is.
(3) Such a measurement is conducted in every predetermined time. It is assumed herein that, in the third measurement, the CO₂ absorbent 15 is sampled to obtain the concentration X₃ that is the third measurement result.
(4) Based on the concentration X₃ that is the measurement result, if it is determined that the concentration X₃ deviates from the set range (e.g., X±1%) (for example, the concentration drops), the controlling apparatus performs a control to raise the exiting gas temperature (T₂). By way of this control, the water accompanying the flue gas 21 having CO₂ reduced is increased by a controller not shown. As a result, the amount of water flowing down in the CO₂ absorber 16 is reduced, recovering the concentration of the CO₂ absorbent 15 into the set range (e.g., X±1%).
In this manner, it is possible to prevent a deterioration of the absorbing performance due to the concentration reduction in the absorbent caused by continuous operation of the CO₂ recovering apparatus.

A level meter 41 is provided in the bottom liquid depository of the CO₂ absorber 16 to measure the level of the absorbent. If the level of the liquid becomes equal to or lower than a predetermined value, a supplemental liquid 42 of a specified concentration (e.g., X) is supplied into the CO₂ absorbent.
In this manner, the liquid level can be kept constant, and the concentration of the absorbent can also be kept within a predetermined specified range.

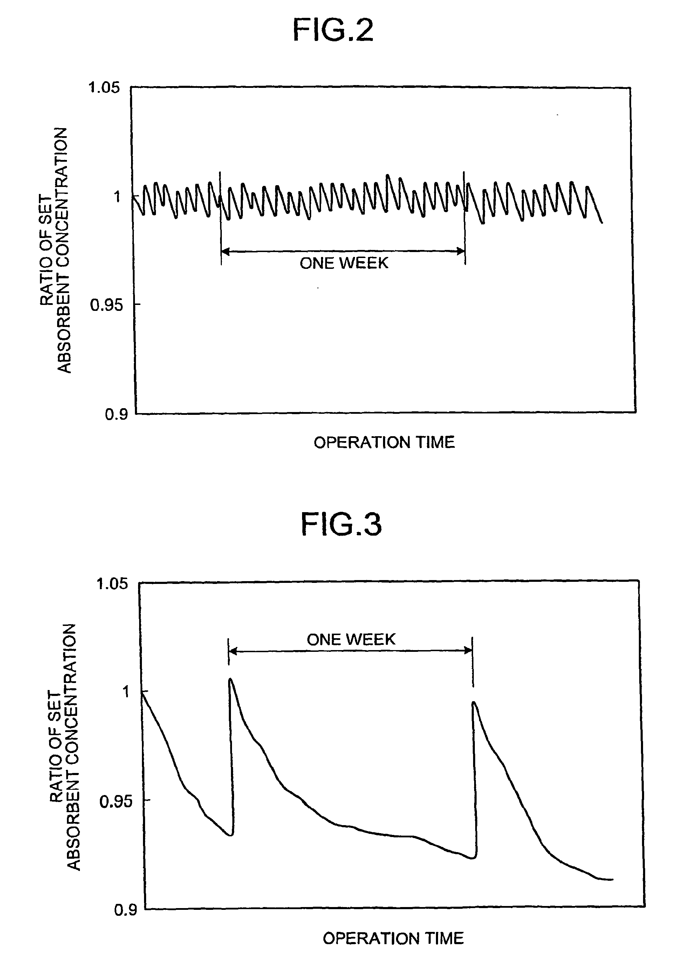

A relationship between the operation time of the CO₂ recovering apparatus and a ratio of a set concentration of the absorbent will now be explained for the scenario of the present invention (Fig. 2) and for the scenario of the conventional technology (Fig. 3) disclosed in the Japanese Patent Application Laid-open No. 2[001-252524.
As shown in Fig. 2, according to the present invention, upon confirming that the liquid level drops to a predetermined level by way of the level meter 41, the supplemental liquid 42 of the specified concentration (e.g., X) is supplied into the CO₂ absorbent to keep the liquid level constant, as indicated in the relationship between the operation time and the ratio of the set concentration of the absorbent shown in Fig. 2.
More specifically, as shown in Fig. 2, by conducting several fine controls within a day, the concentration of the CO₂ absorbent can be kept to a constant level, and to a constant concentration.

In contrast, according to the conventional technology shown in Fig. 3, an absorbent of high concentration is supplied once a week to maintain the concentration. During the time, the concentration of the absorbent becomes gradually low, deteriorating the performance of the absorbent. Therefore, to recover a predetermined amount of CO₂, a larger amount of the steam 25, supplied in the regenerating heater 24, will be used to release CO₂ (an increase by approximately 3%), thus reducing the heat efficiency.

The level meter 41, shown in Fig. 1, may also be designed to measure a plurality of levels to lower the absorber level within a plurality of ranges (for example, the levels may be set to five stages L₁, L₂ ... L₅) while keeping the exiting gas temperature (T₂) of the CO₂ absorber 16 within a predetermined range. In this scenario, when the absorber level reaches the lowest set level (L₅), the controlling apparatus controls to supply the CO₂ absorbent 15 of the specified concentration (e.g., X±10% in a relative ratio) into the system. In this manner, even when the liquid level gradually lowers (from L₁ to L₅), the concentration of the absorbent can be kept within a constant range, while maintaining the absorbing performance thereof.

### Example 2

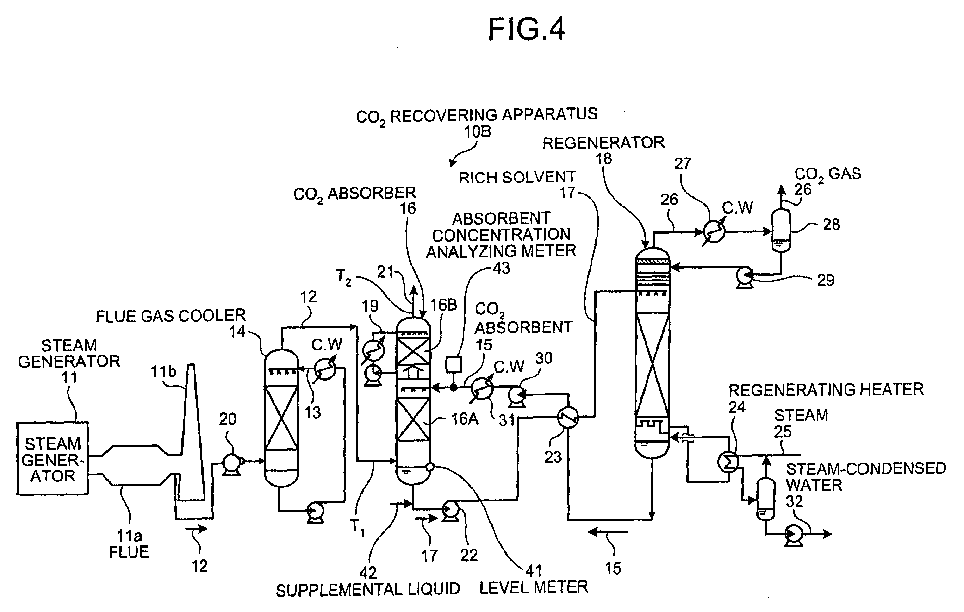

A CO₂ recovering apparatus according to a second embodiment of the present invention will now be explained with reference to Fig. 4.
Fig. 4 is a schematic of a structure of the CO₂ recovering apparatus according to the second embodiment. In Fig. 4, the same structures as those included in the CO₂ recovering apparatus shown in Fig. 1 are given with the same references signs, and redundant explanations thereof are omitted herein.
As shown in Fig. 4, the CO₂ recovering apparatus 10B according to the second embodiment includes an absorbent concentration analyzing meter 43 that analyzes the concentration of the CO₂ absorbent 15 that is the lean solvent regenerated in the regenerator 18.

As disclosed in Japanese Patent Application Laid-open No. H11-258160, examples of the absorbent concentration analyzing meter 43 include a liquid chromatograph analyzer and a laser Raman analyzer.
A measurement result of the absorbent concentration analyzing meter 43 may be sent to the controlling apparatus not shown to automate a measurement and a control of the absorbent concentration.

## Claims

1. A CO₂ recovering apparatus including a CO₂ absorber (16) that brings flue gas containing CO₂ into contact with a CO₂ absorbent to reduce the CO₂ contained in the flue gas, and a regenerator (18) that reduces CO₂ contained in rich solvent absorbing CO₂ in the CO₂ absorber (16) to regenerate the rich solvent, so that lean solvent that is the CO₂ absorbent having the CO₂ reduced in the regenerator (18) is reused in the CO₂ absorber (16), **characterized in that** it comprises:
a controller that detects a difference between a temperature of gas entering the CO₂ absorber (16) and that of gas exiting the CO₂ absorber (16), and an absorbent concentration of the CO₂ absorbent, and controls the absorbent concentration of the CO₂ absorbent within a set range by adjusting an amount of water contained in the gas depending on the difference between the temperature of the gas entering the CO₂ absorber (16) and that of the gas exiting the CO₂ absorber (16).

2. The CO₂ recovering apparatus according to claim 1, further comprising a CO₂ absorbent level meter (41) disposed in a bottom liquid depository of the CO₂ absorber (16), wherein
a CO₂ absorbent of a set concentration is supplied when a liquid level drops.

3. The CO₂ recovering apparatus according to claim 1 or 2, wherein
the temperature of the gas entering the CO₂ absorber (16) and that of the gas exiting the absorber (16), and the absorbent concentration and the liquid level of the CO₂ absorbent are detected, and
the liquid level is lowered incrementally, and the CO₂ absorbent of the set concentration is supplied into a system when the liquid level reaches a lowest set level, while keeping the temperature of the gas exiting the CO₂ absorber (16) within a predetermined range.

4. A CO₂ recovering method using a CO₂ absorber (16) that brings flue gas containing CO₂ into contact with a CO₂ absorbent to reduce the CO₂ contained in the flue gas, and a regenerator (18) that reduces CO₂ contained in rich solvent absorbing CO₂ in the CO₂ absorber (16) to regenerate the rich solvent, so that lean solvent that is the CO₂ absorbent having the CO₂ reduced in the regenerator (18) is reused in the CO₂ absorber (16), **characterized in that** it comprises:
detecting a difference between a temperature of gas entering the CO₂ absorber (16) and that of gas exiting the CO₂ absorber (16), and an absorbent concentration of the CO₂ absorbent; and
controlling the absorbent concentration of the CO₂ absorbent within a set range by adjusting an amount of water contained in the gas depending on the difference between the temperature of the gas entering the CO₂ absorber (16) and that of the gas exiting the CO₂ absorber (16).

## Patentansprüche

1. CO₂-Rückgewinnungsvorrichtung, umfassend einen CO₂-Absorber (16), der CO₂-haltiges Abgas in Kontakt mit einem CO₂-Absorbens bringt, um das in dem Abgas enthaltene CO₂ zu reduzieren, und einen Regenerator (18), der in einem reichhaltigen Lösemittel, das in dem Absorber (16) CO₂ absorbiert, enthaltenes CO₂ reduziert, um das reichhaltige Lösemittel zu regenerieren, so daß gasarmes Lösemittel, das das CO₂-Absorbens ist, das das CO₂ in dem Regenerator (18) reduziert hat, in dem CO₂- Absorber (16) wiederverwendet wird, **dadurch gekennzeichnet, daß** sie umfaßt:
eine Steuereinheit, die einen Unterschied einer Temperatur von Gas, das in den CO₂-Absorber (16) eintritt, und der von Gas, das aus dem Absorber (16) austritt, und eine Absorbenskonzentration des CO₂-Absorbens detektiert und die Absorbenskonzentration des CO₂-Absorbens innerhalb eines eingestellten Bereichs durch Regeln einer in dem Gas enthaltenen Menge Wasser abhängig von dem Unterschied zwischen der Temperatur des Gases, das in den CO₂-Absorber (16) eintritt, und der des Gases, das aus dem CO₂-Absorber (16) austritt, steuert.

2. CO₂-Rückgewinnungsvorrichtung nach Anspruch 1,
ferner umfassend einen CO₂-Absorbens-Pegelmesser (41), der in einem Bodenflüssigkeitslager des CO₂-Absorbers (16) angeordnet ist, wobei
ein CO₂-Absorbens einer eingestellten Konzentration zugeführt wird, wenn der Flüssigkeitspegel fällt.

3. CO₂-Rückgewinnungsvorrichtung nach Anspruch 1 oder 2,
wobei
die Temperatur des in den CO₂-Absorber (16) eintretenden Gases und die des aus dem Absorber (16) austretenden Gases und die Absorbenskonzentration und der Flüssigkeitspegel des CO₂-Absorbens detektiert werden und
der Flüssigkeitspegel schrittweise gesenkt wird und das CO₂-Absorbens der eingestellten Konzentration in ein System geführt wird, wenn der Flüssigkeitspegel einen tiefsten eingestellten Pegel erreicht, während die Temperatur des aus dem CO₂-Absorber (16) austretenden Gases innerhalb eines vorbestimmten Bereichs gehalten wird.

4. CO₂-Rückgewinnungsverfahren, das einen CO₂-Absorber (16), der CO₂ enthaltendes Abgas in Kontakt mit dem CO₂-Absorbens bringt, um das in dem Abgas enthaltene CO₂ zu reduzieren, und einen Regenerator (18) verwendet, der in einem reichhaltigen Lösemittel, das CO₂ in dem Absorber (16) absorbiert, enthaltenes CO₂ reduziert, um das reichhaltige Lösemittel zu regenerieren, so daß gasarmes Lösemittel, das das CO₂-Absorbens ist, das das CO₂ in dem Regenerator (18) reduziert hat, in dem CO₂-Absorber (16) wiederverwendet wird, **dadurch gekennzeichnet, daß** es umfaßt:
Detektieren eines Unterschieds zwischen einer Temperatur von Gas, das in den CO₂-Absorber (16) eintritt, und der von Gas, das aus dem CO₂-Absorber (16) austritt, und einer Absorbenskonzentration des CO₂-Absorbens und
Steuern der Absorbenskonzentration des CO₂-Absorbens innerhalb einer eingestellten Reichweite durch Regeln einer in dem Gas enthaltenen Menge Wasser in Abhängigkeit von dem Unterschied zwischen der Temperatur des Gases, das in den CO₂-Absorber (16) eintritt, und der des Gases, das aus dem CO₂-Absorber (16) austritt.

## Revendications

1. Appareil de récupération de CO₂ comprenant un absorbeur de CO₂ (16) qui amène du gaz de fumée contenant du CO₂ en contact avec de l'absorbant de CO₂ afin de réduire le CO₂ contenu dans le gaz de fumée, et un régénérateur (18) qui réduit le CO₂ contenu dans un solvant riche absorbant du CO₂ dans l'absorbeur de CO₂ (16) afin de régénérer le solvant riche, de telle sorte que du solvant pauvre qui est l'absorbant de CO₂ ayant le CO₂ réduit dans le régénérateur (18) est réutilisé dans l'absorbeur de CO₂ (16), **caractérisé en ce qu'**il comporte :
un dispositif de commande qui détecte une différence entre une température du gaz entrant dans l'absorbeur de CO₂ (16) et celle du gaz sortant de l'absorbeur de CO₂ (16), et une concentration en absorbant de l'absorbant de CO₂, et commande la concentration en absorbant de l'absorbant de CO₂ dans une plage de consigne en ajustant une quantité d'eau contenue dans le gaz en fonction de la différence entre la température du gaz entrant dans l'absorbeur de COₛ (16) et celle du gaz sortant de l'absorbeur de CO₂ (16).

2. Appareil de récupération de CO₂ selon la revendication 1, comportant en outre un dispositif de mesure de niveau d'absorbant de CO₂ (41) disposé dans un dépôt de liquide inférieur de l'absorbeur de CO₂ (16), dans lequel
un absorbant de CO₂ d'une concentration de consigne est délivré quand un niveau de liquide chute.

3. Appareil de récupération de CO₂ selon la revendication 1 ou 2, dans lequel
la température du gaz entrant dans l'absorbeur de CO₂ (16) et celle du gaz sortant de l'absorbeur (16), et la concentration en absorbant et le niveau de liquide de l'absorbant de CO₂ sont détectés, et
le niveau de liquide est abaissé de manière incrémentale, et l'absorbant de CO₂ de la concentration de consigne est délivré dans un système quand le niveau de liquide atteint un niveau de consigne le plus bas, tout en maintenant la température du gaz sortant de l'absorbeur de CO₂ (16) dans une plage prédéterminée.

4. Procédé de récupération de CO₂ utilisant un absorbeur de CO₂ (16) qui amène du gaz de fumée contenant du CO₂ en contact avec un absorbant de CO₂ afin de réduire le CO₂ contenu dans le gaz de fumée, et un régénérateur (18) qui réduit le CO₂ contenu dans un solvant riche absorbant du CO₂ dans l'absorbeur de CO₂ (16) afin de régénérer le solvant riche, de telle sorte que du solvant pauvre qui est l'absorbant de CO₂ ayant le CO₂ réduit dans le régénérateur (18) est réutilisé dans l'absorbeur de CO₂ (16), **caractérisé en ce qu'**il comporte le fait de :
détecter une différence entre une température du gaz entrant dans l'absorbeur de CO₂ (16) et celle du gaz sortant de l'absorbeur de CO₂ (16), et une concentration en absorbant de l'absorbant de CO₂ ; et
commander la concentration en absorbant de l'absorbant de CO₂ dans une plage de consigne en ajustant une quantité d'eau contenue dans le gaz en fonction de la différence entre la température du gaz entrant dans l'absorbeur de CO₂ (16) et celle du gaz sortant de l'absorbeur de CO₂ (16).
